(19) Europäisches Patentamt
European Patent Office
Office européen des brevets

(11) **EP 1 884 162 B1**

(12) **EUROPÄISCHE PATENTSCHRIFT**

(45) Veröffentlichungstag und Bekanntmachung des Hinweises auf die Patenterteilung:
**12.09.2012 Patentblatt 2012/37**

(51) Int Cl.:
***A21C 9/04*** *(2006.01)*

(21) Anmeldenummer: **07113047.0**

(22) Anmeldetag: **24.07.2007**

(54) **Verfahren und Vorrichtung zum Verteilen einer vorbestimmten Masse eines Guts**

Method and device for distributing a predetermined mass of a product

Procédé et dispositif de répartition d'une masse prédéterminée d'un produit

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **31.07.2006 DE 102006035269**

(43) Veröffentlichungstag der Anmeldung:
**06.02.2008 Patentblatt 2008/06**

(73) Patentinhaber: **Dr. AUGUST OETKER NAHRUNGSMITTEL KG**
**33617 Bielefeld (DE)**

(72) Erfinder:
• **Rohe, Thomas**
**49632, Essen i.O. (DE)**

• **große Kohorst, Werner**
**49413, Dinklage (DE)**
• **Dr. Spiegel, Udo**
**33619, Bielefeld (DE)**
• **Schäfer, Thomas**
**33659, Bielefeld (DE)**
• **Pisch, Torsten**
**33719, Bielefeld (DE)**

(74) Vertreter: **Taruttis, Stefan Georg**
**TARUTTIS Patentanwaltskanzlei**
**Aegidientorplatz 2b**
**30159 Hannover (DE)**

(56) Entgegenhaltungen:
**EP-A1- 1 188 379      EP-A1- 1 388 286**
**US-A1- 2002 114 871**

## Beschreibung

Die Erfindung betrifft ein Verfahren zum Verteilen einer vorbestimmten Masse eines Guts (Abgabemasse) während eines Abgabezyklus auf einer Produktfläche eines Zwischenprodukts, das die Schritte umfaßt:

a) Fördern des Guts mittels einer Zuführeinrichtung entlang einer Zuführrichtung;

b) Fördern der Zwischenprodukte mittels eines Produktförderers entlang einer Produktförderrichtung;

c) Bestimmen der auf der Zuführeinrichtung geförderten Masse des Guts in Abhängigkeit eines Abstands des Guts von einem Abwurfrand der Zuführeinrichtung;

d) Abfördern einer der Abgabemasse entsprechenden Förderlänge in dem Abgabezyklus von der Zuführeinrichtung; und

e) Leiten der Abgabemasse durch einen Leitschacht auf die Produktfläche des Zwischenprodukts.

Die EP 1 388 286 A1 beschreibt ein Verfahren zum automatisierten Belegen von Pizzaböden mit Lebensmittelstücken, die von einem Förderband abgefördert werden und durch trichterförmige Elemente auf die Pizzaböden geleitet werden. Das Verfahren zeichnet sich dadurch aus, dass die belegten Pizzaböden zumindest nach dem Belegen einzeln verwogen werden.

Die EP 1 188 379 A1 beschreibt eine Vorrichtung zur gleichmäßigen Bestreuung von Pizzaböden mit geriebenem Käse, wobei der Käse zwischen einem zuführenden Förderband und einem oberhalb des Pizzabodens angeordneten Verteilmechanismus absatzweise von einem Trichter mit verschließbarem Boden aufgefangen und gewogen wird. Nach Verwiegung des aufgefangenen geriebenen Käses kann der Boden des Trichters geöffnet werden, und der Käse nach homogener Verteilung auf den Pizzaboden fallen.

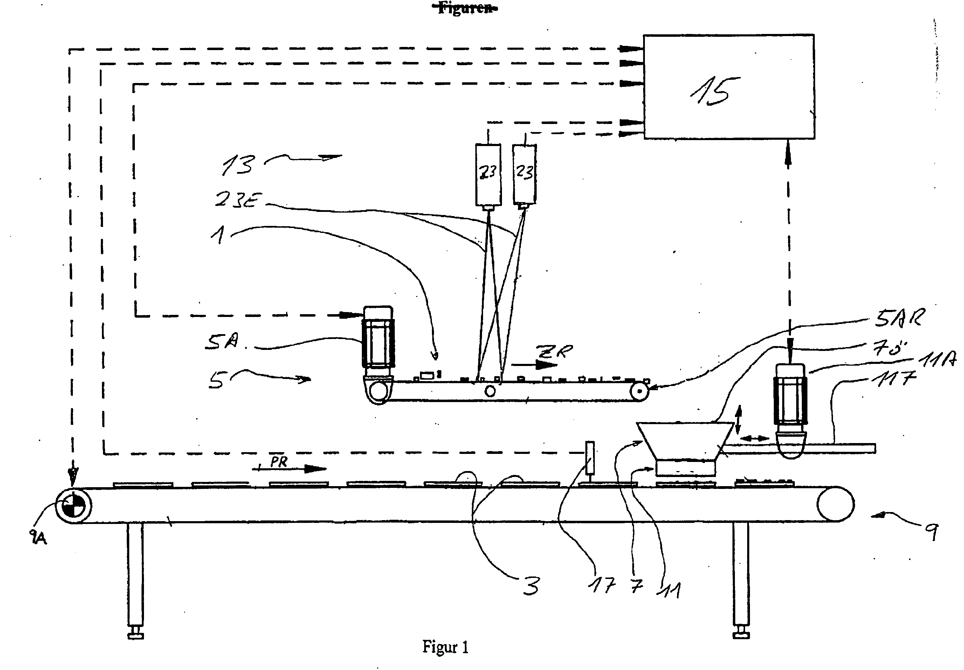

In Fig. 1 ist eine nicht erfindungsgemäße Vorrichtung zur Durchführung dieses Verfahrens gezeigt.

Die in Fig. 1 gezeigte Vorrichtung umfaßt einen Produktförderer 9 in Form eines Förderbandes, auf dem Zwischenprodukte 3 (vorliegend kreisrunde Pizzaböden) entlang einer Produktförderrichtung PR kontinuierlich gefördert werden.

Der Produktförderer 9 weist einen Antrieb 9A auf, der von einer Steuerung 15 gesteuert wird.

Dem Produktförderer 9 ist mindestens ein Lichttaster 17 zugeordnet, der die Position von Zwischenprodukten 3 auf dem Produktförderer 9 erfasst, und der mit der Steuerung 15 verbunden ist.

Oberhalb des Produktförderers 9 ist in einem Abstand eine Zuführeinrichtung 5 in Form eines Förderbandes angeordnet, auf der Gut 1 entlang einer Zuführrichtung ZR intermittierend gefördert wird.

Die Zuführeinrichtung 5 weist einen Antrieb 5A auf, der ebenfalls von der Steuerung 15 gesteuert wird.

Das Gut 1 wird während eines Abgabezyklus auf der Zuführeinrichtung 5 in Zuführrichtung ZR gefördert, bis dieses über einen Abwurfrand 5AR der Zuführeinrichtung 5 abgegeben und auf die Zwischenprodukte 3 verteilt wird. Das Gut 1 wird während des Abgabezyklus kontinuierlich von der Zuführeinrichtung 5 gefördert.

Das auf der Zuführeinrichtung 5 geförderte Gut 1 ist vorliegend ein stückiges Gut, beispielsweise Gemüse, Gemüsestücke, Obst, Obststücke oder Hackfleisch, das in gefrorener Form vorliegen kann.

Die Masse von einzelnen Stücken des Guts 1 wird durch ein folgend beschriebenes, optisches Verfahren bestimmt, so daß die erfassbare Größe einzelner Stücke des Guts 1 nach unten durch die Auflösung von in dem optischen Verfahren verwendeten Kameras beschränkt ist. Bei einer herkömmlichen linearen Auflösung einer in dem Verfahren verwendeten Kamera von beispielsweise 1024 Pixeln auf 250 mm erfasster Länge auf der Zuführeinrichtung 5 ergibt sich eine minimale, erfassbare Fläche von Stücken des Guts 1 zu 0,06 mm².

Bei dem optischen Verfahren zur Bestimmung der Masse von Stücken des Guts 1 auf der Zuführeinrichtung 5 werden zwei oberhalb der Zuführeinrichtung 5 angeordnete Kameras 23 verwendet, die ebenfalls mit der Steuerung 15 verbunden sind und deckungsgleiche überlappende Erfassungsbereiche aufweisen.

Mit Hilfe der Kameras 23 werden Bilder von Stücken des Guts 1 aus zwei verschiedenen Richtungen erzeugt, und in der Steuerung 15 verwendet, um ein Volumen der einzelnen Stücke anhand der erstellten Bilder mittels einer Approximation, beispielsweise durch Ellipsoide, zu bestimmen. Das auf diese Weise bestimmte Volumen einzelner Stücke des Guts 1 wird mit der Dichte des Guts 1 multipliziert, wodurch sich die Masse der Stücke des Guts 1 ergibt.

Da die Steuerung 15 mit dem Antrieb 5A der Zuführeinrichtung 5 verbunden ist und die Kameras 23 in einem festen Abstand von dem Abwurfrand 5AR der Zuführeinrichtung 5 angeordnet sind, liegen in der Steuerung 15 Daten vor, die die Lage der einzelnen Stücke des Guts 1 auf der Zuführeinrichtung 5 relativ zu dem Abwurfrand 5A und deren Masse wiedergeben.

Soll in einem Abgabezyklus eine vorbestimmte Masse des Guts 1 abgegeben werden, so addiert die Steuerung 15 ausgehend von dem Abwurfrand 5AR entgegen der Zuführrichtung ZR die Masse der auf der Zuführeinrichtung 5 angeordneten Stücke des Guts 1 auf, bis die gewünschte Masse erreicht ist. Die sich dabei ergebende Länge (Förderlänge FL) wird anschließend von der Zuführeinrichtung 5 abgefördert, indem die Steuerung 15 ein dementsprechendes Signal an den Antrieb 5A der Zuführeinrichtung 5 sendet, wodurch die vorbestimmte Masse des Guts abgegeben wird.

Die beiden Kameras 23 und die Steuerung 15 bilden daher eine Massenbestimmungseinrichtung 13, die die Masse von einzelnen Stücken des Guts 1 auf der Zuführeinrichtung 5 bestimmt und deren Position auf der Zuführeinrichtung 5 erfaßt.

Zwischen dem Produktförderer 9 und der Zuführeinrichtung 5 ist ein Leitschacht 11 mit einem Aufnahmebereich 7 angeordnet.

Der Leitschacht 11 ist zylindrisch, wobei sein Durchmesser d dem Durchmesser des Zwischenprodukts 3 (den kreisförmigen Pizzaboden) entspricht. Alternativ kann der Durchmesser des kreisförmigen Leitschachts 11 kleiner als der Durchmesser des Zwischenprodukts 3 sein.

Der Aufnahmebereich 7 weist an seinem oberen Ende eine quadratische Aufnahmeöffnung 7ö auf, wobei die senkrecht zur Zuführrichtung ZR verlaufenden Seitenkanten SK der quadratischen Aufnahmeöffnung 7ö eine Länge aufweisen, die an die Breite B der Zuführeinrichtung 5 in derselben Richtung angepasst ist, um sämtliches von der Zuführeinrichtung 5 abgefördertes Gut 1 mit der Aufnahmeöffnung 7ö aufzunehmen.

Die quadratische Aufnahmeöffnung 7ö verjüngt sich konisch nach unten und geht in den kreisförmigen Querschnitt des Leitschachts 11 über.

Dem Leitschacht 11 ist eine Horizontalführung 11F sowie ein Antrieb 11A, der mit der Steuerung 15 verbunden ist, zugeordnet, so daß der Leitschacht 11 in horizontaler Richtung entlang der Führung 11F hin- und herverfahrbar ist.

Dem Leitschacht 11 ist ferner eine nicht dargestellte Vertikalführung mit entsprechendem von der Steuerung 15 gesteuerten Antrieb zugeordnet, so daß der Leitschacht 11 auch vertikal hinund her verfahrbar ist.

Die beiden dem Leitschacht 11 zugeordneten Antriebe sind von der Steuerung 15 derart gesteuert, daß zu Beginn eines Abgabezyklus der Leitschacht 11 aus der in Fig. 1 gezeigten Anfangsposition in Richtung auf das Zwischenprodukt 3 abgesenkt wird, in der das Abfördern des Guts 1 von der Zuführeinrichtung 5 beginnt, der Leitschacht 11 wird dann in Produktförderrichtung PR in Positionsübereinstimmung mit dem Zwischenprodukt 3 verfahren, bis die vorbestimmte Masse des Guts 1 von der Zuführeinrichtung 5 abgefördert und auf dem Zwischenprodukt 3 angeordnet ist, woraufhin der Leitschacht 11 dann von dem Zwischenprodukt 3 in vertikaler Richtung in seine Endposition abgehoben und entgegen der Produktförderrichtung PR in seine Anfangsposition verfahren wird.

Der Leitschacht 11 und der Aufnahmebereich 7 stellen auf diese Weise sicher, daß die vorbestimmte Masse des Guts 1 tatsächlich auf dem Zwischenprodukt 3 angeordnet wird, und nicht beispielsweise auf den Produktförderer 9 fällt.

Die Steuerung 15 steuert die Antriebe 5A und 9A für die Zuführeinrichtung 5 bzw. den Produktförderer 9 sowie die Antriebe für den Leitschacht 11 in Abhängigkeit von den Signalen der Lichttaster 17, die die Lage der Zwischenprodukte 3 auf dem Produktförderer 9 angeben.

Ein Nachteil der Vorrichtung der Fig. 1 ist, daß eine Taktzeit zum Belegen des Zwischenprodukts 3 mit Gut 1 nach unten begrenzt ist, weil eine Fördergeschwindigkeit der Zuführeinrichtung 5 nach oben begrenzt ist (oberhalb derselben würde das Gut 1 über die Aufnahmeöffnung 7ö hinausschießen).

Ein weiterer Nachteil betrifft die Tatsache, daß das Gut 1 auf der Zuführeinrichtung 5 nicht zwingend gleichmäßig verteilt angeordnet ist, wodurch der Fall eintreten kann, daß die Abgabemasse des Guts 1 auf einer relativ geringen Förderlänge angeordnet ist, wodurch das Gut 1 nur auf einer kleinen Teilfläche der Produktfläche des Zwischenprodukts 3 (dem Pizzaboden) verteilt wird. Eine gleichmäßige Verteilung des Guts 1 auf der Produktfläche des Zwischenprodukts 3 kann daher nicht sichergestellt werden.

Aufgabe der vorliegenden Erfindung ist es daher, eine Vorrichtung und ein Verfahren zum Verteilen einer vorbestimmtem Masse eines Guts während eines Abgabezyklus auf einer Produktfläche eines Zwischenprodukts bereitzustellen, durch die bzw. das eine möglichst gleichmäßige Verteilung des Guts auf dem Zwischenprodukt erreicht wird und mit der bzw. dem sich kürzere Taktzeiten erzielen lassen.

Diese Aufgabe wird verfahrensseitig bei einem gattungsgemäßen Verfahren gelöst durch: f) Erstellen einer Zuordnung zwischen Zielflächen der Produktfläche für das Gut und darauf zu verteilenden Teilmassen m; der Abgabemasse; g) Lenken des im Schritt e) frei fallenden Guts gegen ein gesteuertes Umlenkmittel für das Gut und h) Umlenken des Guts mit Hilfe des Umlenkmittels durch den Leitschacht auf die Produktfläche, wobei für jede Teilmasse m; ein Umlenkwinkel des Umlenkmittels derart bestimmt wird, daß jede Teilmasse m; auf ihre zugehörige Zielfläche umgelenkt wird, bis die Abgabemasse abgefördert ist.

Im Schritt f) kann die Produktfläche in i senkrecht zur Produktförderrichtung verlaufende Produktflächenstreifen als Zielflächen unterteilt werden, und folgend jedem Produktflächenstreifen eine Teilmasse $m_i$ der Abgabemasse zugeordnet werden, die auf diesem verteilt werden soll und die auf einem Teilabschnitt $FL_i$ der Förderlänge aufliegt.

Alternativ kann im Schritt f) die mittels der Zuführeinrichtung zugeführte Abgabemasse in Teilmassen $m_i$ oder eine der Abgabemasse entsprechende Förderlänge in Teilabschnitt $FL_i$, die Teilmassen $m_i$ entsprechen, unterteilt werden, und folgend jeder Teilmasse $m_i$ ein Produktflächenstreifen als Zielfläche zugeordnet werden, auf dem diese verteilt werden soll.

Ein Umlenkwinkel zur Umlenkung einer Teilmasse m; auf einen Produktflächenstreifen kann mit Hilfe der Impulsgesetze berechnet werden, wobei jeder Produktflächenstreifen zur Berechnung desselben auf eine quer zur Produktförderrichtung verlaufende Linie oder einen Punkt reduziert wird.

Alternativ kann ein Umlenkwinkel zur Umlenkung einer Teilmasse $m_i$ auf einen Produktflächenstrei-

fen mit Hilfe einer experimentell bestimmten Umlenkwinkelrelation bestimmt werden, die jedem Produktflächenstreifen, der auf eine quer zur Produktförderrichtung verlaufende Linie oder einen Punkt reduziert ist, bei einer vorgegebenen Fördergeschwindigkeit der Zuführrichtung ein Umlenkwinkel zuordnet.

Bevorzugt werden alle Produktflächenstreifen gleichmäßig mit dem Gut belegt.

In diesem Fall sind die Produktflächenstreifenbreiten der Produktflächenstreifen vorteilhaft gleich groß.

Die Produktflächenstreifen können alternativ unterschiedlich stark mit dem Gut belegt werden.

In diesem Fall können die Produktflächenstreifenbreiten der Produktflächenstreifen verschieden groß sein.

Bevorzugt weisen die Produktflächenstreifen eine Produktflächenstreifenbreite auf, die weniger als 20%, weniger als 10%, weniger als 5%, weniger als 1 % oder weniger als 0,1% einer Produktlänge des Zwischenprodukts in Produktförderrichtung entspricht.

Das Zwischenprodukt 3 ist vorzugsweise ein flächiges Lebensmittel, z.B. ein Pizzaboden, eine Baguette- oder Brötchenhälfte, ein Kuchen oder kann ein zu befüllender Behälter mit einer z.B. dem Leitschacht 11 zugewandten Öffnung, z.B. eine Tüte, Dose oder Kartonage sein.

Diese Aufgabe wird vorrichtungsseitig gelöst durch eine Vorrichtung zum Verteilen einer vorbestimmten Masse eines Guts (Abgabemasse) während eines Abgabezyklus auf einer Produktfläche eines Zwischenprodukts mit einer Zuführeinrichtung zum Fördern des Guts entlang einer Zuführrichtung, einem Produktförderer zum Fördern von Zwischenprodukten entlang einer Produktförderrichtung sowie einer Massenbestimmungseinrichtung zum Bestimmen der auf der Zuführeinrichtung geförderten Masse des Guts in Abhängigkeit eines Abstands des Guts von einem Abwurfrand der Zuführeinrichtung, wobei ein Umlenkmittel für das Gut mit einer zugeordneten Steuerung vorgesehen ist und diese eingerichtet ist, das erfindungsgemäße Verfahren durchzuführen.

Weiterhin betrifft die Erfindung die Verwendung der Vorrichtung zum Belegen oder Befüllen eines Lebensmittels bzw. eines Behälters.

Bevorzugt ist der Zuführeinrichtung und / oder dem Produktförderer ein Drehimpulsgeber zugeodnet, um einen IST-Wert des Vorschubs der Zuführeinrichtung bzw. des Produktförderers zu bestimmen.

Dem Produktförderer ist bevorzugt mindestens ein Lichttaster zugeordnet, der eine Position des Zwischenprodukts auf dem Produktförderer erfasst.

Das Umlenkmittel ist in einem ersten Ausführungsbeispiel eine Prallplatte.

Die Prallplatte kann senkrecht zu ihrer Drehachse konvex oder konkav gekrümmt sein.

Das Umlenkmittel ist in einem zweiten Ausführungsbeispiel durch gesteuerte Luftdüsen gebildet, die Luftstöße zum Umlenken des Guts erzeugen.

Die Massenbestimmungseinrichtung ist bevorzugt durch mindestens eine Kamera mit zugeordneter Steuerung gebildet, um die Masse des Guts auf der Zuführeinrichtung mittels eines optischen Verfahrens zu bestimmen.

Die Erfindung wird nachfolgend anhand von zwei Ausführungsbeispielen unter Bezugnahme auf eine Zeichnung erläutert. Es zeigen:

Fig. 1 eine schematische Darstellung einer Vorrichtung zum Verteilen einer vorbestimmten Masse eines Guts während eines Abgabezyklus auf einer Produktfläche eines Zwischenprodukt gemäß dem Stand der Technik;

Fig. 2 eine schematische Darstellung eines ersten Ausführungsbeispiels einer erfindungsgemäßen Vorrichtung zum Verteilen einer vorbestimmtem Masse eines Guts während eines Abgabezyklus auf einer Produktfläche eines Zwischenprodukts;

Fig. 3 einen vergrößerten Ausschnitt der erfindungsgemäßen Vorrichtung der Fig. 2;

Fig. 4a) bis c) schematische Darstellungen von Draufsichten eines Zwischenprodukts 3, wobei die Produktfläche des jeweiligen Zwischenprodukts in senkrecht zur Produktförderrichtung verlaufende Produktflächenstreifen unterteilt ist;

Fig. 5 eine schematische Darstellung eines zweiten Ausführungsbeispiels der erfindungsgemäßen Vorrichtung;

Fig. 6 eine Draufsicht auf die Vorrichtung der Fig. 5 entlang der Linie VI-VI der Fig. 5;

Fig. 7 eine graphische Darstellung einer beispielhaften Funktion, die den Verlauf der benötigten Masse des Guts entgegen einer Produktförderrichtung für ein Zwischenprodukt zeigt; und

Fig. 8 eine graphische Darstellung einer beispielhaften Umlenkwinkelrelation.

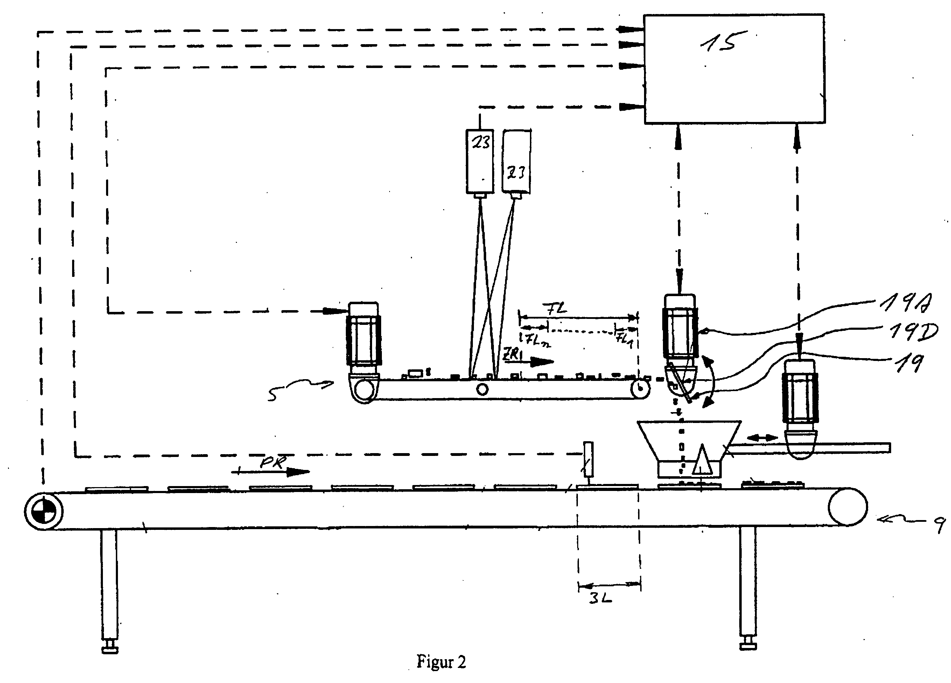

Unter Bezug auf die Fig. 2, 3 und 4 wird zunächst ein erstes Ausführungsbeispiel der Erfindung beschrieben.

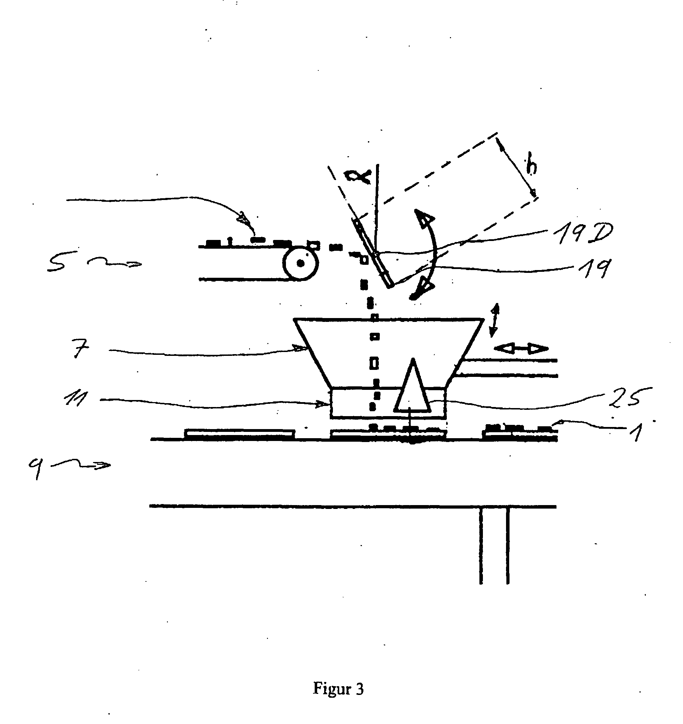

Die erfindungsgemäße Vorrichtung der Fig. 2 und 3 entspricht der unter Bezug auf Fig. 1 beschriebenen Vorrichtung, weist jedoch zusätzlich eine ortsfeste Prallplatte 19 als Umlenkmittel auf, um das Gut 1 von der Zuführeinrichtung 5 auf das Zwischenprodukt 3 zu lenken. Die Prallplatte 19 ist mittels eines Antriebs 19A um eine Drehachse 19D drehbar, wobei der Antrieb 19A ebenfalls von der Steuerung 15 gesteuert ist.

Die Drehachse 19D verläuft senkrecht zur Bildebene der Fig. 2 und somit senkrecht zu der Zuführrichtung ZR und der Produktförderrichtung PR, die ihrerseits parallel zueinander verlaufen.

Die Prallplatte 19 besteht im wesentlichen aus einem ebenen, rechteckigen Materialstreifen, beispielsweise einem Kunststoff- oder V2A-Stahlstreifen. Der Materialstreifen kann alternativ oval, kreisförmig oder quadratisch sein.

Das Gut 1 wird von der Zuführeinrichtung 5 mit einer ausreichend hohen Geschwindigkeit abgefördert, so daß es gegen die Prallplatte 19 prallt, um von dieser auf eine zu belegende Produktfläche 3PF des Zwischenprodukts 3 umgelenkt zu werden.

Die Prallplatte 19 weist entlang der Drehachse 19D eine Breite b auf, die mindestens der Breite B der Zuführeinrichtung 5 entspricht, so daß das gesamte, von der Zuführeinrichtung 5 abgeförderte Gut 1 gegen die Prallplatte 19 prallt.

Die Prallplatte 19 weist senkrecht zur Drehachse 19D eine mindestens anzusetzende Höhe h auf, die ausreichend groß ist, daß das gesamte von der Zuführeinrichtung 5 abgeförderte Gut 1 gegen die Prallplatte 19 prallt. Die Höhe h der Prallplatte 19 ist von der Fördergeschwindigkeit der Zuführeinrichtung 5 sowie dem Abstand der Drehachse 19D von dem Abwurfrand 5AR der Zuführeinrichtung 5 abhängig.

Ein Anstellwinkel $\alpha$ der Prallplatte 19 zur Umlenkung des Guts 1 auf die Produktfläche 3PF wird von der Steuerung 15 berechnet und mittels des Antriebs 19A der Prallplatte 19 eingestellt, wobei der Anstellwinkel $\alpha$ wie folgend beschrieben von der Steuerung 15 berechnet wird.

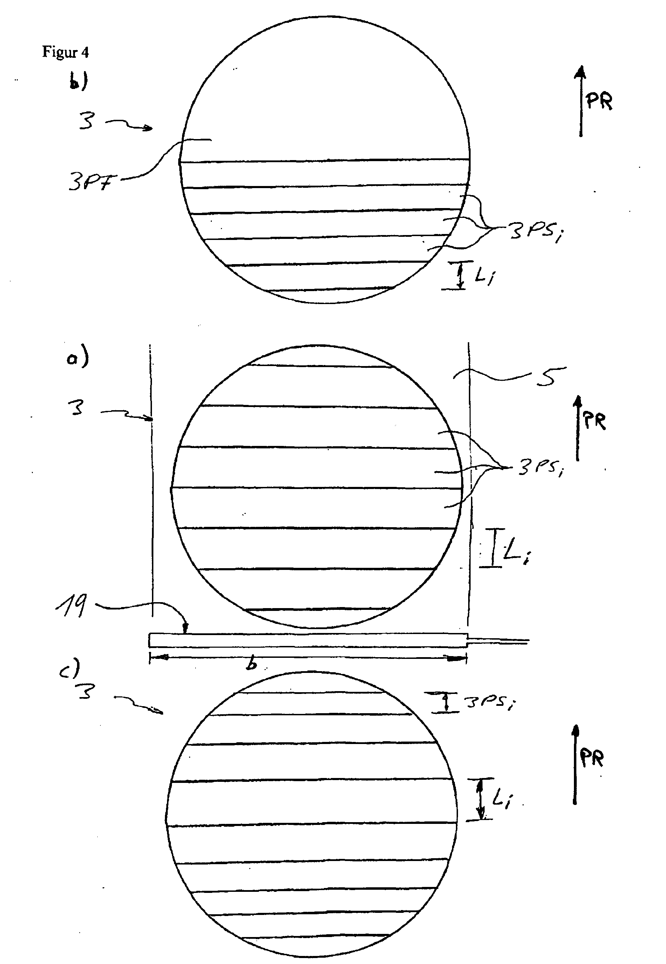

Die mit dem Gut 1 zu belegende Produktfläche 3PF des Zwischenprodukts 3 wird von einem Bediener in Zielflächen (Produktflächenstreifen $3PS_i$) unterteilt, die senkrecht zu der Produktförderrichtung PR verlaufen und die jeweils eine Produktflächenstreifenbreite L; aufweisen, wie in Fig. 4a) dargestellt.

Jedem Produktflächenstreifen $3PS_i$ wird folgend von dem Bediener eine Teilmasse m; der Abgabemasse zugeordnet, die auf dem Produktflächenstreifen $3PS_i$ verteilt werden soll.

Die Steuerung 15 berechnet anhand der Fördergeschwindigkeit des Produktförderers 9 und der Produktflächenstreifenbreite L; die Lage eines jeden Produktflächenstreifens $3PS_i$ während des Abgabezyklus relativ zu dem Abwurfrand 5AR der Zuführeinrichtung 5, wobei jeder Produktflächenstreifen $3PS_i$ auf eine Linie senkrecht zur Produktförderrichtung PR oder einen Punkt reduziert ist. Ein Produktflächenstreifen $3PS_i$ kann beispielsweise auf seinen in Produktförderrichtung PR vorderen oder hinteren Rand oder eine Mittellinie, die den Produktstreifen $3PS_i$ in symmetrische Hälften teilt, reduziert sein.

In der Steuerung 15 liegt ferner, wie oben beschrieben, die Massenverteilung der Stücke des Guts 1 auf der Zuführeinrichtung 5 vor. Aufgrund dieser Daten und der Fördergeschwindigkeit der Zuführeinrichtung 5 berechnet die Steuerung 15, zu welchem Zeitpunkt während eines Abgabezyklus welche Masse des Guts 1 über den Abwurfrand 5AR abgegeben wird. Es wird vorausgesetzt, daß sich der Verlauf der Massenverteilung während des freien Falls zwischen dem Abwurfrand 5AR der Zuführeinrichtung 5 und der Prallplatte 19 nicht ändert. Dieser zeitliche Verlauf der über den Abwurfrand 5AR abgegebenen Masse des Guts 1 wird durch die Steuerung 15 als stetige Funktion berechnet. Die Förderlänge FL, auf der die Abgabemasse aufliegt, kann somit in Teilabschnitte $FL_i$ unterteilt werden, auf denen jeweils die entsprechende Teilmasse m; aufliegt, die einem Produktflächenstreifen $3PS_i$ zugeordnet ist.

Auf diese Weise ist beim Abgeben von der Zuführeinrichtung 5 von einem Stück des Guts die Ausgangsposition (Abwurfrand 5AR der Zuführeinrichtung 5) und die Ausgangsgeschwindigkeit als Vektor (Fördergeschwindigkeit der Zuführeinrichtung 5 parallel zur Zuführrichtung ZR) sowie die Endposition (der auf einen Punkt oder eine Linie reduzierte Produktflächenstreifen $3PS_i$) und die Endgeschwindigkeit als Betrag (Geschwindigkeit der Zuführeinrichtung 5 plus Fallgeschwindigkeit durch die Erdbeschleunigung) bekannt.

Setzt man einen elastischen Stoß der Stücke des Guts 1 mit der Prallplatte 19 voraus (Einfallswinkel der Stücke des Guts 1 gleich Ausgangswinkel der Stücke des Guts 1) und ferner voraus, daß die Stücke des Guts 1 nicht seitlich (senkrecht zur Zuführrichtung ZR) beim Stoß mit der Prallplatte 19 abgelenkt werden (Reduktion auf zwei Dimensionen), so lässt sich der Umlenkwinkel für jede Teilmasse m; an der Prallplatte 19 unter Verwendung der Impulsgesetze berechnen, wobei die Prallplatte 19 senkrecht zu ihrer Drehachse 19D durch eine Geradengleichung dargestellt ist, die in Abhängigkeit von dem Anstellwinkel $\alpha$ parametrisiert ist. Für jede Teilmasse m; wird ein entsprechender Umlenkwinkel berechnet, wobei natürlich mit der ersten Teilmasse $m_1$ begonnen wird, und folgend sukzessive die Umlenkwinkel für die folgenden Teilmassen $m_2$, $m_3$ ..., $m_n$ berechnet werden.

Auf diese Weise wird somit sukzessive jedem Produktflächenstreifen 3PSi ein Teilabschnitt $FL_i$ der Förderlänge FL zugeordnet (auf dem die Teilmasse m; aufliegt), und für jedes Paar aus Produktflächenstreifen $3PS_i$ und Teilabschnitt $FL_i$ ein Umlenkwinkel berechnet, um die Teilmasse m; auf den zugehörigen Produktflächenstreifen $3PS_i$ umzulenken.

Der für jede Teilmasse $m_i$ berechnete Umlenkwinkel führt zu einem Anstellwinkel $\alpha$, den die Prallplatte 19 während der Abgabe der Teilmasse m; einnehmen muss, damit auf jeden Produktflächenstreifen $3PS_i$ die gewünschte Teilmasse $m_i$ der Abgabemasse umgelenkt wird. (Bei der Berechnung des Umlenkwinkels wird die Lage der Prallplatte 19 im Raum festgelegt, wodurch sich die relative Lage derselben zu einer Vertikalen ergibt, und somit der Anstellwinkel $\alpha$ zwischen der oberen Hälfte der Prallplatte 19 und der Vertikalen, s. Fig. 3.

Für eine gleichmäßige Verteilung des Guts 1 auf dem Produktflächenstreifen $3PS_i$ ist somit entscheidend, daß die jeweilige Produktflächenstreifenbreite $L_i$

nicht zu groß gewählt ist. Wurde die Produktflächenstreifenbreite L_i zu groß gewählt und der Produktflächenstreifen 3PS_i beispielsweise auf seine senkrecht zur Produktförderrichtung PR verlaufende Mittellinie reduziert, so kann es vorkommen, daß ein Bereich um die Mittellinie mit Gut 1 bestreut ist, der in Produktförderrichtung PR vordere und hintere Randbereich des Produktflächenstreifens 3PS_i jedoch nicht mit Gut 1 belegt ist.

Jeder Produktflächenstreifen 3PS_i weist daher vorteilhaft eine Produktflächenstreifenbreite L_i auf, die weniger als 20%, weniger als 10%, weniger als 5%, weniger als 1% oder weniger als 0,1% einer Produktlänge 3L des Zwischenprodukts 3 in Produktförderrichtung PR entspricht.

Die Produktflächenstreifen 3PS_i können alle dieselbe Produktflächenstreifenbreite L_i aufweisen, wie in Fig. 4a) dargestellt, wenn beispielsweise das Gut 1 gleichmäßig auf der Produktfläche 3PF verteilt werden soll.

Wie in Fig. 4b) dargestellt, können die Produktflächenstreifen 3PS_i jedoch auch nur auf einem Teilbereich der Produktfläche 3PF angeordnet sein, wenn beispielsweise nur dieser Teilbereich mit dem Gut 1 belegt werden soll.

Wie in Fig. 4c) dargestellt, können die Produktflächenstreifen 3PS_i auch unterschiedliche Produktflächenstreifenbreiten L_i aufweisen, wobei diese insbesondere unterschiedlich stark mit dem Gut 1 belegt werden können.

Die Lage der Produktflächenstreifen 3PS_i auf der Produktfläche 3PF bzw. einem Teilbereich der Produktfläche 3PF sowie die Anzahl der Produktflächenstreifen 3PS_i und deren Breite L_i kann in Abhängigkeit von der zu belegenden Produktfläche 3PF des Zwischenprodukts 3 von einem Bediener vorgegeben werden.

Es kann gewünscht sein, nur einen Teilbereich der Produktfläche 3PF mit dem Gut 1 zu belegen. In diesem Fall kann der Konus des Aufnahmebereichs 7 nach unten innerhalb des Leitschachts 11 durch entsprechende Leitflächen verlängert sein, um eine kleinere untere Austrittsöffnung als die des Leitschachts 11 zu bilden, die dem gewünschten, zu belegenden Teilbereich der Produktfläche 3PF entspricht.

Umgekehrt kann es gewünscht sein, gewisse Teilbereiche der Produktfläche 3PF nicht mit dem Gut 1 zu belegen. In diesem Fall kann beispielsweise ein entsprechend geformter Abdeckkörper 25 in dem Leitschacht 5 angeordnet werden, vorliegend beispielsweise ein kegelförmiger Abdeckkörper 25. Trifft Gut 1 auf einen derartigen Abdeckkörper 25, so gleitet dieses entlang desselben nach unten, so daß ein Teilbereich der Produktfläche 3 frei von dem Gut 1 gehalten ist.

Vorliegend ist die Drehachse 19D mittig zwischen einem oberen Ende und einem unteren Ende der Prallplatte 19 angeordnet, wodurch die Prallplatte 19 in zwei gleich große Hälften geteilt ist. Alternativ kann die Drehachse 19D an einer beliebigen Stelle zwischen dem oberen und dem unteren Ende der Prallplatte 19 angeordnet sein.

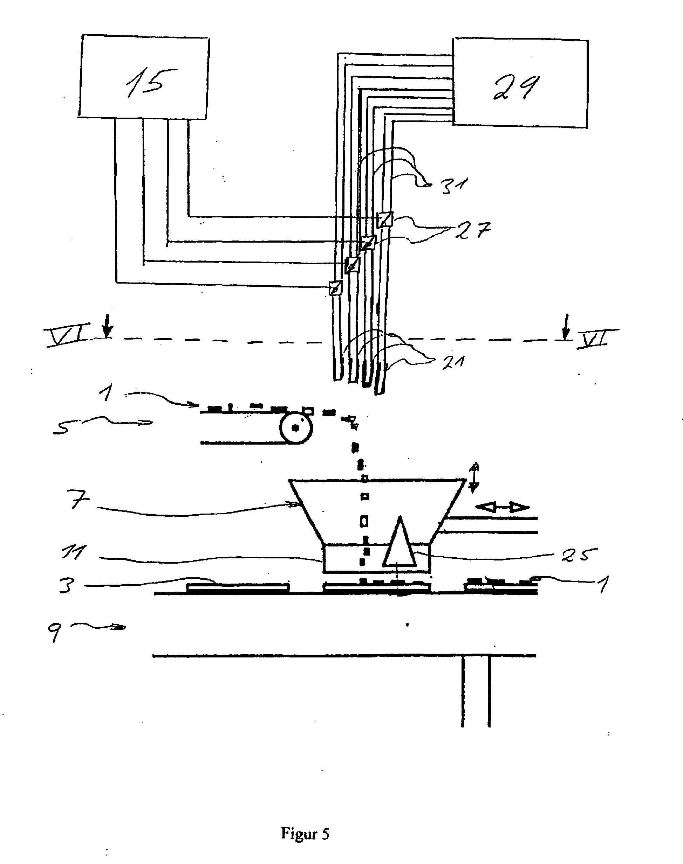

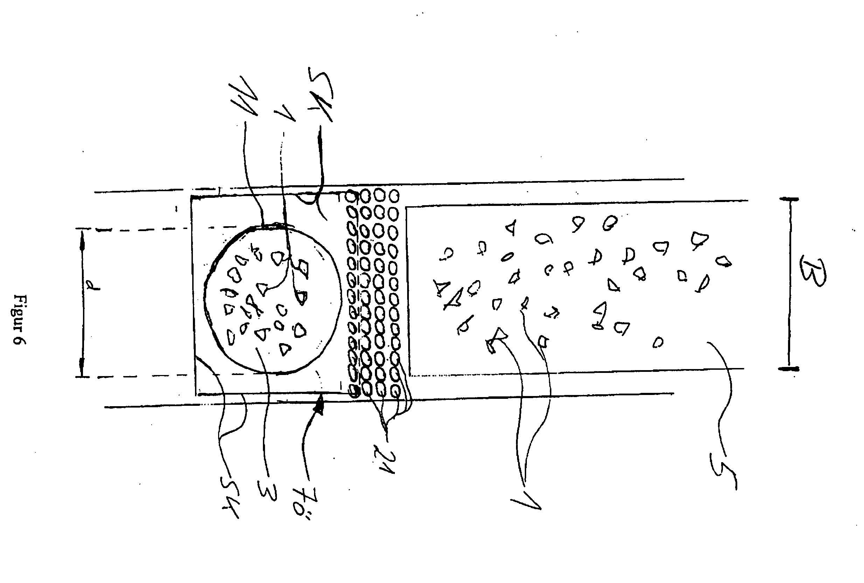

Unter Bezug auf Fig. 5 und 6 wird nachfolgend ein zweites Ausführungsbeispiel der Erfindung beschrieben.

In diesem Ausführungsbeispiel ist die Prallplatte 19 durch gesteuerte Luftdüsen 21 ersetzt, wobei die Luftdüsen 21 bevorzugt in einer regelmäßigen Anordnung angeordnet sind, beispielsweise in Form eines Schachbrettmusters, wie in Fig. 6 dargestellt. Die Luftdüsen 21 stehen über Leitungen 31 in Verbindung mit einem Luftdruckspeicher 29, wobei die Leitungen 31 jeweils ein Ventil 27 aufweisen, das von der Steuerung 15 gesteuert wird, um bspw. die Dauer eines Luftstoßes zu regeln.

In Fig. 5 sind in Produktförderrichtung PR vier Luftdüsen 21 dargestellt, wobei alternativ mehr oder weniger Lüftdüsen 21 entlang dieser Richtung vorgesehen sein können.

Die in Fig. 6 dargestellten Luftdüsen 21 sind quer zur Zuführeinrichtung 5 entlang einer Breite vorgesehen, die mindestens der Breite B der Zuführeinrichtung 5 entspricht, wie in Fig. 6 dargestellt.

Die Anzahl der Luftdüsen 21 in Produktförderrichtung PR und senkrecht dazu (senkrecht zur Bildebene der Fig. 5) sollte abhängig von den Abmessungen der Zuführeinrichtung 5 und dem Zwischenprodukt 3 so gewählt werden, daß das gesamte von der Zuführeinrichtung 5 abgeförderte Gut 1 durch gesteuerte Luftstöße der Luftdüsen 21 nach unten auf die Produktflächenstreifen 3PS_i umgelenkt werden kann.

Die Steuerung 15 ermittelt, wie zuvor beschrieben, den jeweils notwendigen Umlenkwinkel, und berechnet die zu aktivierenden Luftdüsen sowie die Dauer des jeweils aus der Luftdüse 21 austretenden Luftstoßes, um die gewünschte Teilmasse m_i auf den zugehörigen Produktflächenstreifen 3PS_i umzulenken.

Bevorzugt ist der Zuführeinrichtung 5 und dem Produktförderer 9 in beiden Ausführungsbeispielen ein Drehimpulsgeber zugeordnet, der einen tatsächlichen Vorschub der Zuführeinrichtung 5 bzw. des Produktförderers 9 an die Steuerung 15 liefert, um mit Hilfe dieser Daten den Umlenkwinkel zur Umlenkung des Guts 1 genauer berechnen zu können.

Da das Gut 1 auf der Zuführeinrichtung 5 keiner übermäßigen Beschleunigung ausgesetzt sein soll, um ein Rutschen des Guts 1 auf der Zuführeinrichtung 5 zu verhindern, kann die Zuführeinrichtung 5 beispielsweise Senkungen aufweisen, um das Gut 1 in diesen zu halten. Ferner kann die Zuführeinrichtung 5 eine Oberfläche mit guten Haftungseigenschaften aufweisen, um ein Rutschen des Guts 1 auf der Zuführeinrichtung 5 zu verhindern.

Ist die Massenbestimmungseinrichtung 13 ausgelegt, auch die Masse von Pulver auf der Zuführeinrichtung 5 positionsabhängig zu bestimmen, so kann das erfindungsgemäße Verfahren auch mit einem pulverförmigen Gut 1 ausgeführt werden.

Bevorzugt ist der Abwurfrand 5AR durch eine Abwurfkante gebildet.

Zur Berechnung des Umlenkwinkels wurde bisher eine Zuordnung zwischen Zielflächen (Produktflächenstreifen $3PS_i$) und darauf zu verteilenden Teilmassen m; dadurch erstellt, daß ein Bediener die Produktfläche 3PF in die Produktflächenstreifen $3PS_i$ unterteilt und jedem Produktflächenstreifen $3PS_i$ eine Teilmasse m; zuweist, die auf diesem verteilt werden soll. Bei dieser Zuordnung wird somit jedem Produktflächenstreifen $3PS_i$ eine Teilmasse m; zugeordnet, die einem Teilabschnitt $FL_i$ der Förderlänge FL entspricht.

Die Zuordnung zwischen den Zielflächen (Produktflächenstreifen $3PS_i$) und den Teilmassen m; kann jedoch auch in umgekehrter Richtung erstellt werden, das heißt jedem Teilabschnitt $FL_i$ der Förderlänge FL kann eine Zielfläche (ein Produktflächenstreifen $3PS_i$) zugeordnet werden.

Zu diesem Zweck wird die Förderlänge FL in vorzugsweise entlang der Zuführrichtung ZR gleich lange Teilabschnitte $FL_i$ unterteilt, auf denen jeweils die Teilmasse m; aufliegt.

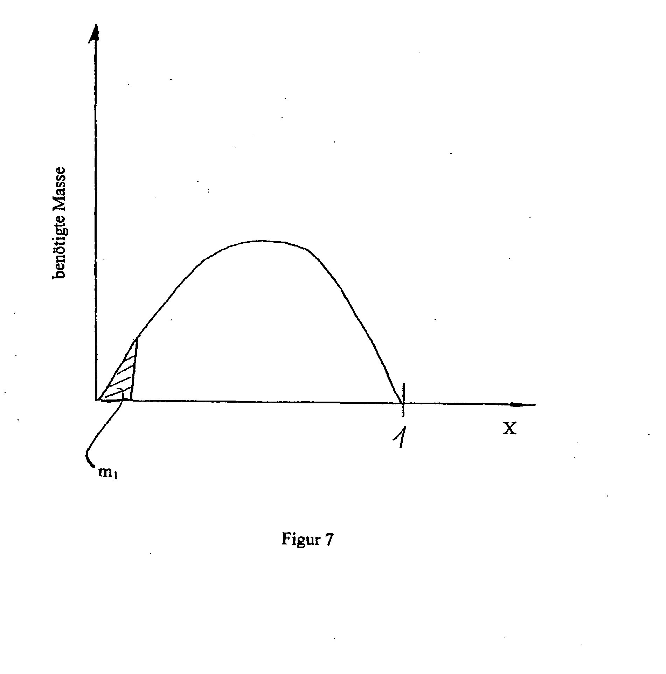

In der Steuerung ist eine Funktion hinterlegt, die die benötigte Masse des Guts 1 entlang der Produktlänge 3L wiedergibt, siehe beispielsweise die Funktion $M_{(x)}$ in Fig. 7, wobei x eine Koordinate ist, die entgegen der Produktförderrichtung PR verläuft, und deren Wert am Anfang der Produktfläche 3PF Null ist und deren Wert am Ende der Produktfläche 3PF der Produktlänge 3L entspricht.

Die in Fig. 2 gezeigte Funktion ist der Einfachheit halber auf 1 normiert.

Diese Funktion wird für die erste Teilmasse $m_1$ (bzw. den ersten Teilabschnitt $FL_1$) so lange von Null bis zu einer variablen Obergrenze A entgegen der Produktförderrichtung PR mit Hilfe eines iterativen Verfahrens integriert, bis das Integral die Teilmasse m; ergibt. Mit anderen Worten wird die Gleichung

$$\int_0^A M_{(x)}\, dx = m_i$$

gelöst, um die obere Grenze A zu bestimmen. Der auf diese Weise bestimmte Wert A entspricht der Produktflächenstreifenbreite $L_1$ des ersten Produktflächenstreifens $3PS_1$, da auf diesem die Teilmasse $m_1$ angeordnet werden soll.

Ist die Produktflächenstreifenbreite $L_1$ bestimmt, so wird der erste Produktflächenstreifen $3PS_1$ auf seine Mittellinie reduziert, das heißt auf eine senkrecht zur Produktförderrichtung PR verlaufende Linie, die A/2 von dem Anfang der zu belegenden Produktfläche 3PF entgegen der Produktförderrichtung PR entfernt ist und diesen in zwei symmetrische Hälften teilt.

Mit Hilfe der Impulsgesetze wird nun, wie oben beschrieben, ein Umlenkwinkel berechnet, um die Teilmasse $m_1$ auf den Produktflächenstreifen $3PS_1$ umzulenken.

Diese Berechnung wird sukzessive für alle Teilmassen m; (bzw. alle Teilabschnitte $FL_i$ der Förderlänge FL) wiederholt, bis die Abgabemasse abgegeben ist, das heißt die Förderlänge FL abgefördert ist.

Auf diese Weise wird somit jedem Teilabschnitt $FL_i$ der Förderlänge FL bzw. jeder Teilmasse m; der Abgabemasse ein Produktflächenstreifen $3PS_i$ der Produktfläche 3PF zugeordnet, der eine der Teilmasse m; entsprechende Produktflächenstreifenbreite L; aufweist, und für jedes Paar aus Teilabschnitt $FL_i$ bzw. Teilmasse m; und Produktflächenstreifen $3PS_i$ ein Umlenkwinkel berechnet, um die Teilmasse m; auf den Produktflächenstreifen $3PS_i$ umzulenken.

Bevorzugt wird die Förderlänge FL in gleichmäßige Teilabschnitte $FL_i$ unterteilt. In einer vorteilhaften Ausgestaltung entspricht ein Teilabschnitt $FL_i$ einem oder mehreren Zeilenbildern der Kamera 15 der Massenbestimmungseinrichtung 13. Alternativ kann die Abgabemasse in Teilmassen m; unterteilt werden, die jeweils Teilabschnitten $FL_i$ der Förderlänge FL entsprechen.

Die zuvor beschriebene Berechnung des Umlenkwinkels kann aufgrund der vorgenommenen Vereinfachungen für bestimmtes Gut 1 ungeeignet sein. Werden beispielsweise frische Gemüsestücke als Gut 1 verwendet, so kann die Annahme eines elastischen Stoßes der Stücke des Guts 1 mit der Prallplatte 19 nicht aufrechterhalten werden. Ferner führt ein Gleiten der Stücke des Guts 1 entlang der Prallplatte 19 dazu, daß die Annahme eines elastischen Stoßes nicht mehr aufrechterhalten werden kann.

In diesen Fällen bietet sich das experimentelle Bestimmen einer Umlenkwinkelrelation an:

Für ein bestimmtes Gut 1 wird für bestimme Fördergeschwindigkeiten der Zuführeinrichtung 5 ein fester Anstellwinkel α der Prallplatte 19 eingestellt, und der Auftreffpunkt des Guts 1 auf der Produktfläche 3PF als Abstand (entlang der Produktförderrichtung PR) von dem Abwurfrand 5AR der Zuführeinrichtung 5 notiert. Dieser Vorgang wird für verschiedene Anstellwinkel α wiederholt.

Dies führt zu einer Tabelle (= Umlenkwinkelrelation), deren eine unabhängige Größe die Fördergeschwindigkeit der Zuführeinrichtung 5 und deren andere unabhängige Größe der Abstand von dem Abwurfrand 5AR entlang der Produktförderrichtung PR auf Höhe der Produktfläche 3PF ist, wobei die Tabellenwerte durch die jeweiligen Umlenkwinkel gebildet sind.

Zur Bestimmung des Umlenkwinkels wird im Betrieb der entsprechende Wert einfach aus der Tabelle (der Umlenkwinkelrelation) entnommen, da die Fördergeschwindigkeit der Zuführeinrichtung 5 der Steuerung bekannt ist, da sie dieselbe vorgibt, und die Zielposition des Guts 1 (Abstand von dem Abwurfrand 5AR entlang Produktförderrichtung PR) wie zuvor beschrieben von der Steuerung 15 bestimmt wird (der auf einen Punkt oder eine Linie reduzierte Produktflächenstreifen $3PS_i$, der bzw. die mit der Produktfördergeschwindigkeit in Produktförderrichtung PR bewegt wird).

Soll die Zuführeinrichtung 5 mit einer Fördergeschwindigkeit gefahren werden, die nicht in der Tabelle (Umlenkwinkelrelation) hinterlegt ist, und/oder soll eine Zielposition erreicht werden, die nicht in der Tabelle (Umlenkwinkelrelation) hinterlegt ist, so wird zwischen den entsprechenden Fördergeschwindigkeiten und/oder den Zielpositionen vorzugsweise linear interpoliert. Sind zwei Interpolationen notwendig, so wird erst die eine und dann die andere unabhängige Größe interpoliert.

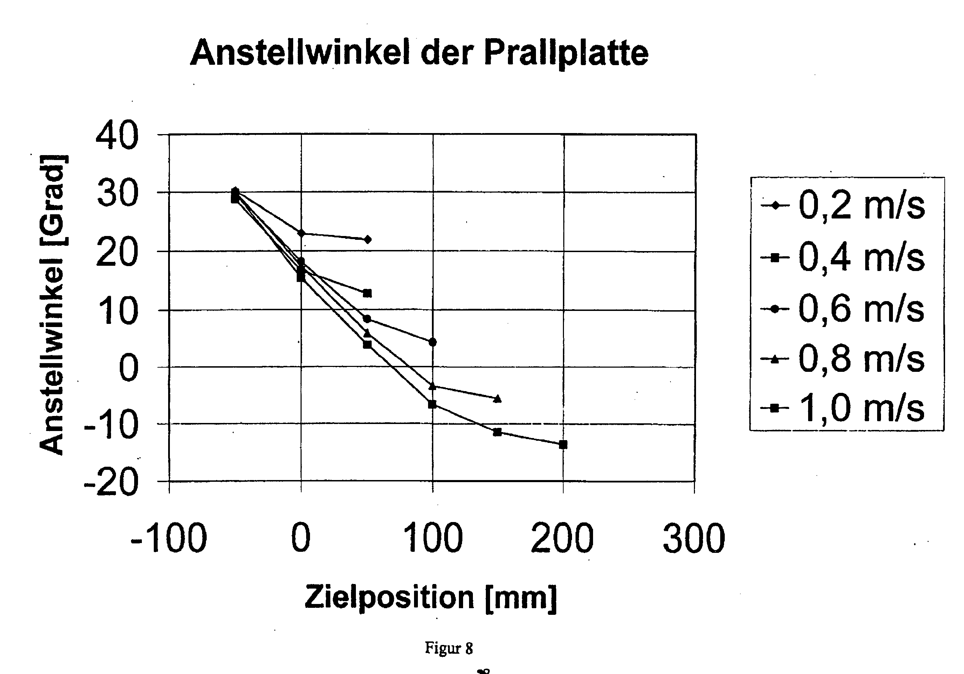

Fig. 8 zeigt eine graphische Darstellung einer beispielhaften Umlenkwinkelrelation, bei der auf der X-Achse die Zielposition aufgetragen ist, bezogen auf den Abwurfrand 5AR der Zuführeinrichtung 5, wobei die positive X-Achse in Produktförderrichtung PR zeigt, und bei der auf der Y-Achse der Anstellwinkel $\alpha$ der Prallplatte 19 aufgetragen ist. Es sind die Verläufe für fünf verschiedene Fördergeschwindigkeiten der Zuführeinrichtung 5 dargestellt. Als Gut 1 wurde gefrorenes Hackfleisch verwendet.

Wie aus der Fig. 8 ersichtlich, sind die dargestellten Verläufe im wesentlichen sinusförmig, so daß die zuvor beschriebene lineare Interpolation mit einem gewissen Fehler behaftet ist, der jedoch bei einer ausreichend hohen Anzahl von Messpunkten (bei der Fördergeschwindigkeit von 1 m/s wurden sechs Messpunkte aufgenommen) vernachlässigbar ist. Die lineare Interpolation liefert vorliegend bei mindestens fünf Messpunkten für die Fördergeschwindigkeiten von 0,8 m/s und 1,0 m/s zufriedenstellende Ergebnisse.

Für die Fördergeschwindigkeiten von 0,2 m/s und 0,4 m/s konnten jeweils nur drei Messpunkte aufgenommen werden, da aufgrund der niedrigen Fördergeschwindigkeit weiter entfernte Zielpositionen (> $\pm$ 50 mm) nicht erreicht werden konnten. Da weiter entfernte Zielpositionen nicht erreicht werden können, führt dies, falls es notwendig sein sollte, diese zu erreichen, zu einem ungleichmäßig bestreuten Zwischenprodukt 3. Ist das Gut 1 jedoch hinreichend gleichmäßig auf der Zuführeinrichtung 5 verteilt, sollte dieser Fall nicht eintreten.

Bezugszeichenliste:

| | |
|---|---|
| 1 | Gut |
| 3 | Zwischenprodukt |
| 3L | Produktlänge des Zwischenprodukts in Produktförderrichtung |
| 3PF | Produktfläche des Zwischenprodukts |
| $3PS_i$ | Produktflächenstreifen |
| 5 | Zuführeinrichtung |
| 5A | Antrieb der Zuführeinrichtung |
| 5AR | Abwurfrand der Zuführeinrichtung |
| 7 | Aufnahmebereich |
| 7ö | Aufnahmeöffnung |
| 9 | Produktförderer |
| 9A | Antrieb des Produktförderers |
| 11 | Leitschacht |
| 11F | Führung des Leitschachts (Horizontalführung) |
| 11A | Antrieb des Leitschachts |
| 13 | Massenbestimmungseinrichtung |
| 15 | Steuerung |
| 17 | Lichttaster |
| 19 | Prallplatte |
| 19A | Antrieb für die Prallplatte |
| 19D | Drehachse der Prallplatte |
| 21 | Luftdüse |
| 23 | Kamera |
| 23E | Erfassungsbereich der Kamera |
| 25 | Abdeckkörper |
| 27 | Ventil |
| 29 | Luftdruckspeicher |
| 31 | Leitung |
| $\alpha$ | Anstellwinkel der Prallplatte 19 |
| b | Breite der Prallplatte 19 |
| B | Breite der Zuführeinrichtung 5 |
| d | Durchmesser des Leitschachts 11 |
| FL | Förderlänge, auf der Abgabemasse angeordnet ist |
| $FL_i$ | Teilabschnitt der Förderlänge, auf der Teilmasse $m_i$ angeordnet ist |
| h | Höhe der Prallplatte 19 |
| L; | Produktflächenstreifenbreite |
| PR | Produktförderrichtung |
| SK | Seitenkante der Aufnahmeöffnung 7ö |
| ZR | Zuführrichtung |

## Patentansprüche

**1.** Verfahren zum Verteilen einer vorbestimmten Masse eines Guts (1) (Abgabemasse) während eines Abgabezyklus auf einer Produktfläche (3PF) eines Zwischenprodukts (3), das die Schritte umfaßt:

    a) Fördern des Guts (1) mittels einer Zuführeinrichtung (5) entlang einer Zuführrichtung (ZR),

    b) Fördern der Zwischenprodukte (3) mittels eines Produktförderers (9) entlang einer Produktförderrichtung (PR),

    c) Bestimmen der auf der Zuführeinrichtung (5) geförderten Masse des Guts (1) in Abhängigkeit eines Abstands des Guts (1) von einem Abwurfrand (5AR) der Zuführeinrichtung (5),

    d) Abfördern einer der Abgabemasse entsprechenden Förderlänge (FL) in dem Abgabezyklus von der Zuführeinrichtung (5), und

    e) Leiten der Abgabemasse durch einen Leitschacht (11) auf die Produktfläche (3PF) des Zwischenprodukts (3),

    f) Erstellen einer Zuordnung zwischen Zielflächen ($3PS_i$) der Produktfläche (3PF) für das Gut (1) und darauf zu verteilenden Teilmassen $m_i$ der Abgabemasse;

g) Lenken des im Schritt e) frei fallenden Guts (1) gegen ein gesteuertes Umlenkmittel (19; 21) für das Gut (1) und

h) Umlenken des Guts (1) mit Hilfe des Umlenkmittels (19; 21) durch den Leitschacht (11) auf die Produktfläche (3PF), wobei für jede Teilmasse $m_i$ ein Umlenkwinkel des Umlenkmittels (19; 21) derart bestimmt wird, daß jede Teilmasse $m_i$ auf ihre zugehörige Zielfläche (3PS$_i$) umgelenkt wird, bis die Abgabemasse abgefördert ist.

2. Verfahren nach Anspruch 1, **dadurch gekennzeichnet, daß** im Schritt f) die Produktfläche (3PF) in i senkrecht zur Produktförderrichtung (PR) verlaufende Produktflächenstreifen (3PS$_i$) als Zielflächen unterteilt wird, und folgend jedem Produktflächenstreifen (3PS$_i$) eine Teilmasse $m_i$ der Abgabemasse zugeordnet wird, die auf diesem verteilt werden soll und die auf einem Teilabschnitt FL$_i$ der Förderlänge (FL) aufliegt.

3. Verfahren nach Anspruch 1, **dadurch gekennzeichnet, daß** im Schritt f) die mittels der Zuführeinrichtung (5) zugeführte Abgabemasse in Teilmassen $m_i$ oder eine der Abgabemasse entsprechende Förderlänge (FL) in Teilabschnitte FL$_i$, die Teilmassen $m_i$ entsprechen, unterteilt wird, und folgend jeder Teilmasse $m_i$ ein Produktflächenstreifen (3PS$_i$) als Zielfläche zugeordnet wird, auf dem diese verteilt werden soll.

4. Verfahren nach Anspruch 2 oder 3, **dadurch gekennzeichnet, daß** ein Umlenkwinkel zur Umlenkung einer Teilmasse $m_i$ auf einen Produktflächenstreifen (3PS$_i$) mit Hilfe der Impulsgesetze berechnet wird, wobei jeder Produktflächenstreifen (3PS$_i$) zur Berechnung desselben auf eine quer zur Produktförderrichtung (PR) verlaufende Linie oder einen Punkt reduziert wird.

5. Verfahren nach Anspruch 2 oder 3, **dadurch gekennzeichnet, daß** ein Umlenkwinkel zur Umlenkung einer Teilmasse $m_i$ auf einen Produktflächenstreifen (3PS$_i$) mit Hilfe einer experimentell bestimmten Umlenkwinkelrelation bestimmt wird, die jedem Produktflächenstreifen (3PS$_i$), der auf eine quer zur Produktförderrichtung (PR) verlaufende Linie oder einen Punkt reduziert ist, bei einer vorgegebenen Fördergeschwindigkeit der Zuführeinrichtung (5) ein Umlenkwinkel zuordnet.

6. Verfahren nach einem der Ansprüche 2 bis 5, **dadurch gekennzeichnet, daß** alle Produktflächenstreifen (3PS$_i$) gleichmäßig mit dem Gut (1) belegt werden.

7. Verfahren nach Anspruch 6, **dadurch gekennzeichnet, daß** die Produktflächenstreifenbreiten (L$_i$) der Produktflächenstreifen (3PS$_i$) gleich groß sind.

8. Verfahren nach einem der Ansprüche 1 bis 5, **dadurch gekennzeichnet, daß** die Produktflächenstreifen (3PS$_i$) unterschiedlich stark mit dem Gut (1) belegt werden.

9. Verfahren nach Anspruch 8, **dadurch gekennzeichnet, daß** die Produktflächenstreifenbreiten (L$_i$) der Produktflächenstreifen (3PS$_i$) verschieden groß sind.

10. Verfahren nach einem der vorangehenden Ansprüche, **dadurch gekennzeichnet, daß** die Produktflächenstreifen eine Produktflächenstreifenbreite (L$_i$) aufweisen, die weniger als 20%, weniger als 10%, weniger als 5%, weniger als 1% oder weniger als 0,1% einer Produktlänge (3L) des Zwischenprodukts in Produktförderrichtung (PR) entspricht

11. Vorrichtung zum Verteilen einer vorbestimmten Masse eines Guts (1) (Abgabemasse) während eines Abgabezyklus auf einer Produktfläche (3PF) eines Zwischenprodukts (3) mit einer Zuführeinrichtung (5) zum Fördern des Guts (1) entlang einer Zuführrichtung (ZR), einem Produktförderer (9) zum Fördern von Zwischenprodukten (3) entlang einer Produktförderrichtung (PR) sowie einer Massenbestimmungseinrichtung (13) zum Bestimmen der auf der Zuführeinrichtung (5) geförderten Masse des Guts (1) in Abhängigkeit eines Abstands des Guts (1) von einem Abwurfrand der Zuführeinrichtung (5), einem Umlenkmittel (19; 21) für das Gut (1) mit einer zugeordneten Steuerung (15), wobei diese eingerichtet ist, das Verfahren nach einem der Ansprüche 1 bis 10 durchzuführen.

12. Vorrichtung nach Anspruch 11, **dadurch gekennzeichnet, daß** der Zuführeinrichtung (5) und / oder dem Produktförderer (9) ein Drehimpulsgeber zugeordnet ist, um einen ISTWert des Vorschubs der Zuführeinrichtung (5) bzw. des Produktförderers (9) zu bestimmen.

13. Vorrichtung nach Anspruch 11 oder 12, **dadurch gekennzeichnet, daß** dem Produktförderer (9) mindestens ein Lichttaster (17) zugeordnet ist, der eine Position des Zwischenprodukts (3) auf dem Produktförderer (9) erfasst.

14. Vorrichtung nach einem der vorangehenden Ansprüche, **dadurch gekennzeichnet, daß** das Umlenkmittel eine Prallplatte (19) ist.

15. Vorrichtung nach Anspruch 14, **dadurch gekennzeichnet, daß** die Prallplatte (19) senkrecht zu ihrer Drehachse (19D) konvex oder konkav gekrümmt ist.

16. Vorrichtung nach einem der Ansprüche 11 bis 13, **dadurch gekennzeichnet, daß** das Umlenkmittel durch gesteuerte Luftdüsen (21) gebildet ist, die Luftstöße zum Umlenken des Guts (1) erzeugen.

17. Vorrichtung nach einem der vorangehenden Ansprüche, **dadurch gekennzeichnet, daß** die Massenbestimmungseinrichtung (13) durch mindestens eine Kamera (23) mit zugeordneter Steuerung (15) gebildet ist, um die Masse des Guts (1) auf der Zufuhreinrichtung (5) mittels eines optischen Verfahrens zu bestimmen.

## Claims

1. Method of distributing a predetermined mass of a product (1) (delivery mass) during a delivery cycle onto a product surface (3PF) of an intermediate product (3), comprising the steps of:

   a) conveying the product (1) by means of a feed device (5) along a feed direction (ZR),
   b) conveying the intermediate product (3) by means of a product conveyor (9) along a product conveying direction (PR),
   c) determining the mass, which is conveyed on the feed device (5), of the product (1) in dependence on the spacing of the product (1) from a discharge edge (5AR) of the feed device (5),
   d) conveying away a conveyor length (FL), which corresponds with the delivery mass, in the delivery cycle from the feed device (5),
   e) conducting the delivery mass through a delivery shaft (11) onto the product surface (3PF) of the intermediate product (3),
   f) establishing an association between target surfaces ($3PS_i$) of the product surface (3PF) for the product (1) and sub-masses $m_i$, which are to be distributed thereon, of the delivery mass,
   g) guiding the product (1), which is free-falling in step e), against a controlled deflecting means (19; 21) for the product (1) and
   h) deflecting the product (1) with the help of the deflecting means (19; 21) through the guide shaft (11) onto the product surface (3PF), wherein a deflecting angle of the deflecting means (19; 21) is so determined for each sub-mass $m_i$ that each sub-mass $m_i$ is deflecting onto its associated target surface ($3PS_i$) until the delivery mass is conveyed away.

2. Method according to claim 1, **characterised in that** in step f) the product surface (3PF) is subdivided into i product surface strips ($3PS_i$), which extend perpendicularly to the product conveying direction (PR), as target surfaces and subsequently associated with each product surface strip ($3PS_i$) is a sub-mass $m_i$ of the delivery mass which is to be distributed thereon and which rests on a sub-section $FL_i$ of the conveyor length (FL).

3. Method according to claim 1, **characterised in that** in step f) the delivery mass fed by means of the feed device (5) is subdivided into sub-masses $m_i$ or a conveyor length (FL), which corresponds with the delivery mass, is subdivided into sub-sections $FL_i$ which correspond with sub-masses $m_i$ and subsequently assigned to each sub-mass $m_i$ is a product surface strip ($3PS_i$) as target surface on which this is to be distributed.

4. Method according to claim 2 or 3, **characterised in that** a deflecting angle for deflection of a sub-mass $m_i$ on a product surface strip ($3PS_i$) is calculated with the help of the pulse law, wherein each product surface strip ($3PS_i$) is, for calculation of the same, reduced to a line extending transversely to the product conveying direction (PR) or to a point.

5. Method according to claim 2 or 3, **characterised in that** a deflecting angle for deflecting a sub-mass $m_i$ onto a product surface strip ($3PS_i$) is determined with the help of an experimentally determined deflecting angle relationship, which assigns a deflecting angle to each product surface strip ($3PS_i$), which is reduced to a line extending transversely to the product conveying direction (PR) or to a point, for a given conveying speed of the conveying device (5).

6. Method according to any one of claims 2 to 5, **characterised in that** all product surface strips ($3PS_i$) are uniformly occupied by the product (1).

7. Method according to claim 6, **characterised in that** the product surface strip widths ($L_i$) of the product surface strips ($3PS_i$) are of the same size.

8. Method according to any one of claims 1 to 5, **characterised in that** the product surface strips ($3PS_i$) are occupied by the product (1) to different degrees.

9. Method according to claim 8, **characterised in that** the product surface strip widths ($L_i$) of the product surface strips ($3PS_i$) are of different size.

10. Method according to any one of the preceding claims, **characterised in that** the product surface strips have a product surface strip width ($L_i$) which corresponds with less than 20%, less than 10%, less than 5%, less than 1% or less than 0.1% of a product length (3L) of the intermediate product in product conveying direction (PR).

**11.** Device for distributing a predetermined mass of a product (1) (delivery mass) during a delivery cycle onto a product surface (3PF) of an intermediate product (3), comprising a feed device (5) for conveying the product (1) along a feed direction (ZR), a product conveyor (9) for conveying intermediate products (3) along a product conveying direction (PR), a mass determining device (13) for determining the mass, which is conveyed on the feed device (5), of the product (1) in dependence on a spacing of the product (1) from a discharge edge of the feed device (5), and a deflecting means (19; 21) for the product (1) with an associated control (15), wherein this is equipped for performing the method according to any one of claims 1 to 10.

**12.** Device according to claim 11, **characterised in that** a rotary pulse transmitter is associated with feed device (5) and/or the product conveyor (9) in order to determine an actual value of the advance of the feed device (5) or of the product conveyor (9).

**13.** Device according to claim 11 or 12, **characterised in that** associated with the product conveyor (9) is at least one light sensor (17) which detects a position of the intermediate product (3) on the product conveyor (9).

**14.** Device according to any one of the preceding claims, **characterised in that** the deflecting means is a baffle plate (19).

**15.** Device according to claim 14, **characterised in that** the baffle plate (19) is convexly or concavely curved perpendicularly to the axis (19D) of rotation thereof.

**16.** Device according to any one of claims 11 to 13, **characterised in that** the deflecting means is formed by controlled air nozzles (21) which generate the air blasts for deflecting the product (1).

**17.** Device according to any one of the preceding claims, **characterised in that** the mass determining device (13) is formed by at least one camera (23) with associated control (15) in order to determine the mass of the product (1) on the feed device (5) by means of an optical method.

## Revendications

**1.** Procédé de répartition d'une masse prédéterminée d'une substance (1) (masse distribuée) sur une surface (3PF) d'un produit intermédiaire (3), au cours d'un cycle de distribution, comprenant les étapes suivantes :

a) convoyage de la substance (1) suivant une direction d'amenée (ZR), au moyen d'un dispositif d'amenée (5),

b) convoyage des produits intermédiaires (3) suivant une direction de convoyage (PR), au moyen d'un convoyeur (9) de produits,

c) détermination de la masse de la substance (1), convoyée sur le dispositif d'amenée (5), en fonction d'une distance comprise entre ladite substance (1) et un bord d'éjection (5AR) dudit dispositif d'amenée (5),

d) évacuation à partir du dispositif d'amenée (5), au cours du cycle de distribution, d'une longueur convoyée (FL) correspondant à la masse distribuée,

e) canalisation de la masse distribuée, vers la surface (3PF) du produit intermédiaire (3), par passage dans un puits de canalisation (11),

f) instauration d'une assignation mutuelle entre des surfaces ciblées ($3PS_i$) de la surface (3PF) du produit, dédiée à la substance (1), et des masses partielles $m_i$ de la masse distribuée qui doivent être réparties sur lesdites surfaces,

g) canalisation de la substance (1), en chute libre durant l'étape e), vers un moyen déflecteur commandé (19 ; 21) dédié à ladite substance (1), et

h) déviation de la substance (1) vers la surface (3PF) du produit à travers le puits de canalisation (11), à l'aide du moyen déflecteur (19 ; 21), sachant qu'un angle de déviation dudit moyen déflecteur (19 ; 21) est déterminé, pour chaque masse partielle $m_i$, de façon telle que chaque masse partielle $m_i$ soit déviée vers la surface ciblée ($3PS_i$) qui lui est associée, jusqu'à ce que la masse distribuée soit évacuée.

**2.** Procédé selon la revendication 1, **caractérisé par le fait que**, durant l'étape f), la surface (3PF) du produit est scindée en i bandes ($3PS_i$) s'étendant perpendiculairement à la direction (PR) de convoyage de produits, et matérialisant des surfaces ciblées, après quoi l'on affecte, à chaque bande ($3PS_i$) de la surface du produit, une masse partielle $m_i$ de la masse distribuée qui doit être répartie sur ladite bande et qui repose sur un segment $FL_i$ de la longueur convoyée (FL).

**3.** Procédé selon la revendication 1, **caractérisé par le fait que**, durant l'étape f), la masse distribuée délivrée au moyen du dispositif d'amenée (5) est scindée en des masses partielles $m_i$, ou bien une longueur convoyée (FL), correspondant à ladite masse distribuée, est scindée en des segments $FL_i$ qui correspondent à des masses partielles $m_i$, après quoi l'on affecte, à chaque masse partielle $m_i$, une bande ($3PS_i$) de la surface du produit qui matérialise une surface ciblée, et sur laquelle ladite masse doit être répartie.

**4.** Procédé selon la revendication 2 ou 3, **caractérisé par le fait qu'**un angle de déviation, visant à dévier une masse partielle $m_i$ vers une bande ($3PS_i$) de la surface du produit, est calculé à l'aide des lois impulsionnelles, chaque bande ($3PS_i$) de la surface du produit étant alors réduite, en vue de son calcul, à un point ou à une ligne s'étendant transversalement par rapport à la direction (PR) de convoyage de produits.

**5.** Procédé selon la revendication 2 ou 3, **caractérisé par le fait qu'**un angle de déviation, visant à dévier une masse partielle $m_i$ vers une bande ($3PS_i$) de la surface du produit, est déterminé à l'aide d'une relation d'angles de déviation qui est déterminée expérimentalement et qui, en présence d'une vitesse de convoyage préétablie du dispositif d'amenée (5), affecte un angle de déviation à chaque bande ($3PS_i$) de la surface du produit réduite à un point, ou à une ligne s'étendant transversalement par rapport à la direction (PR) de convoyage de produits.

**6.** Procédé selon l'une des revendications 2 à 5, **caractérisé par le fait que** toutes les bandes ($3PS_i$) de la surface du produit sont uniformément chargées en substance (1).

**7.** Procédé selon la revendication 6, **caractérisé par le fait que** les largeurs ($L_i$) des bandes ($3PS_i$) de la surface du produit présentent des valeurs égales.

**8.** Procédé selon l'une des revendications 1 à 5, **caractérisé par le fait que** les charges en substance (1) des bandes ($3PS_i$) de la surface du produit présentent des intensités différentes.

**9.** Procédé selon la revendication 8, **caractérisé par le fait que** les largeurs ($L_i$) des bandes ($3PS_i$) de la surface du produit présentent des valeurs différentes.

**10.** Procédé selon l'une des revendications précédentes, **caractérisé par le fait que** les bandes de la surface du produit présentent une largeur ($L_i$) qui correspond à moins de 20 %, à moins de 10 %, à moins de 5 %, à moins de 1 % ou à moins de 0,1 % d'une longueur (3L) du produit intermédiaire dans la direction (PR) de convoyage de produits.

**11.** Dispositif de répartition d'une masse prédéterminée d'une substance (1) (masse distribuée) sur une surface (3PF) d'un produit intermédiaire (3), au cours d'un cycle de distribution, comprenant un dispositif d'amenée (5) dévolu au convoyage de la substance (1) suivant une direction d'amenée (ZR) ; un convoyeur (9) de produits, dévolu au convoyage de produits intermédiaires (3) suivant une direction (PR) de convoyage desdits produits ; un dispositif (13) de détermination de masses, conçu pour déterminer la masse de la substance (1) qui est convoyée sur le dispositif d'amenée (5), en fonction d'une distance comprise entre ladite substance (1) et un bord d'éjection dudit dispositif d'amenée (5) ; ainsi qu'un moyen déflecteur (19 ; 21) dédié à ladite substance (1) et pourvu d'une commande (15) associée, laquelle est agencée en vue de la mise en oeuvre du procédé selon l'une des revendications 1 à 10.

**12.** Dispositif selon la revendication 11, **caractérisé par le fait qu'**un générateur d'impulsions rotatoires est affecté au dispositif d'amenée (5) et/ou au convoyeur (9) de produits, en vue de déterminer une valeur réelle de l'avance respective dudit dispositif d'amenée (5) ou dudit convoyeur (9) de produits.

**13.** Dispositif selon la revendication 11 ou 12, **caractérisé par le fait qu'**au moins un détecteur photoélectrique (17), détectant un emplacement occupé par le produit intermédiaire (3) sur le convoyeur (9) de produits, est affecté audit convoyeur (9) de produits.

**14.** Dispositif selon l'une des revendications précédentes, **caractérisé par le fait que** le moyen déflecteur est une platine déflectrice (19).

**15.** Dispositif selon la revendication 14, **caractérisé par le fait que** la platine déflectrice (19) présente une courbure convexe ou concave perpendiculairement à son axe de rotation (19D).

**16.** Dispositif selon l'une des revendications 11 à 13, **caractérisé par le fait que** le moyen déflecteur est constitué par des buses d'air (21) commandées, qui engendrent des saccades d'air pulsé en vue de dévier la substance (1).

**17.** Dispositif selon l'une des revendications précédentes, **caractérisé par le fait que** le dispositif (13) de détermination de masses est constitué d'au moins une caméra (23) à commande associée (15) en vue de déterminer, au moyen d'un procédé optique, la masse de la substance (1) sur le dispositif d'amenée (5).

Figur 1

EP 1 884 162 B1

Figur 2

Figur 3

Figur 4

b)

3

3PF

3PS$_i$

$L_i$

PR

a)

3

5

3PS$_i$

PR

$L_i$

19

b

c)

3

3PS$_i$

PR

$L_i$

Figur 5

Figur 6

Figur 7

# Anstellwinkel der Prallplatte

Figur 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1388286 A1
- EP 1188379 A1